# EUROPÄISCHE PATENTSCHRIFT

(11) **EP 3 429 050 B1**
(45) Veröffentlichungstag und Bekanntmachung des Hinweises auf die Patenterteilung: **18.12.2019**
(21) Anmeldenummer: 17180518.7
(22) Anmeldetag: 10.07.2017
(51) Int. Cl.: H02J 3/38, H02J 13/00, H02J 3/00

(54) **VERFAHREN ZUR REGELUNG DER WIRKLEISTUNGSABGABE EINES WINDPARKS SOWIE EIN ENTSPRECHENDER WINDPARK**
METHOD FOR CONTROLLING THE POWER OUTPUT OF A WIND FARM AND CORRESPONDING WIND FARM
PROCÉDÉ DE RÉGLAGE DE LA PUISSANCE ACTIVE D'UN PARC ÉOLIEN ET PARC ÉOLIEN CORRESPONDANT

(43) Veröffentlichungstag der Anmeldung: 16.01.2019
(73) Patentinhaber: Nordex Energy GmbH, 22419 Hamburg (DE)
(72) Erfinder: Drossel, Detlef, 22851 Norderstedt (DE); Bode, Florian, 22339 Hamburg (DE)
(74) Vertreter: Hauck Patentanwaltspartnerschaft mbB

(56) Entgegenhaltungen:
- EP-A1- 1 946 436
- EP-A2- 2 516 849
- DE-A1-102013 012 898
- BENLAHBIB B ET AL: "Fractional Order PI Controller for wind farm supervision", 2014 IEEE INTERNATIONAL CONFERENCE ON INDUSTRIAL ENGINEERING AND ENGINEERING MANAGEMENT, IEEE, 9. Dezember 2014 (2014-12-09), Seiten 1234-1238, XP032744849, DOI: 10.1109/IEEM.2014.7058835 [gefunden am 2015-03-11]
- ZHAO HAORAN ET AL: "Distributed Model Predictive Control of a Wind Farm for Optimal Active Power ControlPart II: Implementation With Clustering-Based Piece-Wise Affine Wind Turbine Model", IEEE TRANSACTIONS ON SUSTAINABLE ENERGY, IEEE, USA, Bd. 6, Nr. 3, 1. Juli 2015 (2015-07-01), Seiten 840-849, XP011584854, ISSN: 1949-3029, DOI: 10.1109/TSTE.2015.2418281 [gefunden am 2015-06-17]

## Beschreibung

Die vorliegende Erfindung betrifft ein Verfahren zur Regelung der Wirkleistungsabgabe eines Windparks ebenso wie einen Windpark mit mehreren Windenergieanlagen.

Mit zunehmendem Einsatz von Windenergieanlagen, sei es an Land oder zu See, wird deren Bedeutung für das elektrische Versorgungsnetz größer. Im Hinblick auf die Einspeisung von Wirkleistung führt dies dazu, dass vorgegebene Sollwerte für die am Netzanschlusspunkt eingespeiste Wirkleistung möglichst exakt eingehalten werden sollen. Dies betrifft sowohl den stationären Zustand, bei dem, ausreichend Wind vorausgesetzt, ein konstanter Betrag an Wirkleistung eingespeist wird, wie auch das dynamische Verhalten, bei dem eine Sollwertvorgabe zeitlich geändert wird und/oder veränderliche Windbedingungen vorliegen.

Aus DE 10 2014 000 790 A1 ist eine Windparkregelung mit einem verbesserten Sollwertverhalten bekannt geworden. Der Windpark weist einen Parkmaster mit einem Leistungsregler zur Regelung der in dem Windpark enthaltenen Windenergieanlagen auf. Ein Sollwert für die Leistungsabgabe des Windparks liegt an dem Parkmaster an und wird für die Windenergieanlagen als Sollwertsignale für die Leistungsabgabe ausgegeben. Die Sollwerte für die Windenergieanlagen werden bei einer Änderung des Sollwertsignals für den Windpark korrigiert, wobei der korrigierte Sollwert auf den Leistungsregler aufgeschaltet ist. Mit einem Prädiktor wird der Sollwert für die Windenergieanlage berechnet, wobei hier unterschiedliche Betriebszustände der Windenergieanlagen und unterschiedliche Leistungswerte berücksichtigt werden.

Aus DE 10 2014 000 784 A1 ist ein Windpark mit Vorsteuerung im Leistungsregler bekannt geworden. Der Windpark besitzt einen Parkmaster, der zur Führung der Windenergieanlagen ausgebildet ist, wobei der Parkmaster einen Leistungsregler umfasst. Der Leistungsregler besitzt ein Vorsteuermodul, das ein Maß für die Sollleistung über ein Multiplikationsglied auf den Ausgang des Leistungsreglers aufschaltet. Hierdurch soll ein beschleunigtes Ansprechverhalten der Vorsteuerung bei einer Sollwertreduktion erzielt werden und ein robustes Ansprechverhalten des Windparks geschaffen werden.

Aus EP 2 516 849 A2 ist ein Windpark mit modellbasierter Regelung bekannt. Es werden sowohl elektrische Parameter als auch windbezogene Größen erfasst und einem prediktiven Modell zugeführt.

Der vorliegenden Erfindung liegt die Aufgabe zugrunde, ein Verfahren zur Regelung eines Windparks anzugeben, das mit möglichst einfachen Mitteln Sollwertvorgaben für den Windpark schnell und genau umsetzt sowie einen entsprechend geregelten Windpark zu schaffen.

Erfindungsgemäß wird die Aufgabe durch ein Verfahren mit den Merkmalen nach Anspruch 1 sowie einen Windpark mit den Merkmalen nach Anspruch 7 gelöst. Vorteilhafte Ausgestaltungen bilden die Gegenstände der Unteransprüche.

Das erfindungsgemäße Verfahren ist zur Regelung der Wirkleistungsabgabe eines Windparks mit mindestens zwei Windenergieanlagen vorgesehen. Grundsätzlich ist auch denkbar, andere elektrische Größen des Windparks erfindungsgemäß zu regeln. Der Windpark besitzt mindestens zwei Windenergieanlagen, deren Leistungsabgabe jeweils durch einen Windenergieanlagenregler geregelt wird. Die Windenergieanlagen können vom gleichen oder verschiedenen Bautyp sein. Bei dem erfindungsgemäßen Verfahren wird ein Sollwert der von dem Windpark abzugebenden Wirkleistung an eine Aufteileinheit angelegt, die einen modellierten Wirkleistungssollwert des Windparks erzeugt. Der modellierte Wirkleistungssollwert entspricht aggregiert einem korrigierten Sollwert für den Windpark, den dieser in Summe an seinem Netzverknüpfungspunkt mit einem Energieversorgungsnetz einspeisen soll. Der modellierte Wirkleistungssollwert kann von dem an der Aufteileinheit anliegenden Sollwert der von dem Windpark abzugebenden Wirkleistung abweichen. Zur Erzeugung des modellierten Wirkleistungswerts des Windparks teilt die Aufteileinheit den anliegenden Sollwert der von dem Windpark abzugebenden Wirkleistung auf Wirkleistungssollwerte für die Simulation durch die einzelnen Windenergieanlagen auf. Ferner liegen an der Aufteileinheit die simulierten oder modellierten Wirkleistungssollwerte der einzelnen Windenergieanlagen an, um den modellierten Wirkleistungssollwert des Windparks zu erzeugen.

Die Aufteilung des Wirkleistungssollwerts für den Windpark auf die Wirkleistungssollwerte für die Simulation durch die einzelnen Windenergieanlagen durch die Aufteileinheit, erfolgt basierend auf wenigstens einer Betriebsgröße, die jeweils von den einzelnen Windenergieanlagen bereitgestellt werden und die an der Aufteileinheit anliegen. Die Betriebsgrößen können bevorzugt die verfügbare Wirkleistung der jeweiligen Anlagen angeben. Grundsätzlich sollen möglichst wenige ausgewählte Betriebsgrößen für die Aufteilung herangezogen werden.

Der modellierte Wirkleistungssollwert wird zusammen mit dem Istwert der von dem Windpark abgegebenen Windparkleistung an einen Leistungsregler angelegt. Der Leistungsregler stellt abhängig von den anliegenden Eingangsgrößen eine Reglerstellgröße bereit. Zu der Reglerstellgröße wird eine unabhängig von den Zuständen des Windparks und seinen Istwerten bestimmte Vorsteuerstellgröße zu einer Gesamtstellgröße addiert.

Erfindungsgemäß bestimmt sich in der Aufteileinheit der modellierte Wirkleistungssollwert des Windparks aus einer Summe von modellierten Wirkleistungssollwerten der einzelnen Windenergieanlagen in dem Windpark. Der Wirkleistungssollwert des Windparks oder ein dafür repräsentativer Wert werden auf Modelle der in dem Windpark enthaltenen Windenergieanlagen aufgeteilt, welche das Verhalten der einzelnen Windenergieanlagen simulieren und auf den jeweiligen Windenergieanlagen ausgeführt werden, wobei die Modelle jeweils einen modellierten Sollwert der Wirkleistung der jeweiligen Windenergieanlage, abhängig von dem auf das Modell entfallenden Anteil des Sollwerts des Windparks sowie Betriebsgrößen der jeweiligen Windenergieanlage bestimmen. Bei dem repräsentativen Wert kann es sich beispielsweise um einen prozentualen Wert handeln, der sich auf eine verfügbare Wirkleistung oder auf einen Nennwert bezieht. Bei dem erfindungsgemäßen Verfahren wird der modellierte Wirkleistungssollwert des Windparks durch viele Einzelmodelle gebildet, die jeweils das Verhalten der einzelnen Windenergieanlagen abbilden, so dass für jede Windenergieanlage der jeweilige modellierte Sollwert im Rahmen einer Modellgenauigkeit dem für die jeweilige Windenergieanlage bestimmten Sollwert entspricht. Erfindungsgemäß sind die Modelle der in dem Windpark enthaltenen jeweiligen Windenergieanlagen den jeweiligen Windenergieanlagenreglern zugeordnet. Der Vorteil dieser Zuordnung besteht darin, dass die Vielzahl an Parametern, Betriebsgrößen und Zustandsindikatoren, die in den einzelnen Windenergieanlagenregler vorliegen, auch direkt dem Modell jeweiligen der Windenergieanlage zur Verfügung stehen. Die Modelle können bevorzugt auf den jeweiligen Windenergieanlagenreglern ausgeführt werden. Alternativ kann den Reglern auch eine weitere Datenverarbeitungseinrichtung zugeordnet sein, die über eine Schnittstelle mit dem Regler verbunden ist, oder an der die gleichen Eingangsgrößen wie an dem Regler anliegen. Ein aufwendiger Datentransport von den Windenergieanlagen durch den Windpark zu einer zentralen Steuerung kann durch die zuvor beschriebene Architektur unterbleiben. Dadurch, dass die Modelle lediglich die Ergebnisse der Simulation liefern, kann ein hoher Datenverkehr vermieden werden. Zudem werden Verzögerungen und Datenverluste wirksam vermieden und somit das Gesamtregelungsverhalten des Windparks optimiert. Parameter, Betriebsgrößen und Zustandsindikatoren einer Anlage können ohne Beschränkung umfassen: Istwerte, Sollwerte oder Mittelwerte von elektrischen Größen der Anlage, Drehzahl, Pitchwinkel, Azimutwinkel, Schwingungsdaten, externe Größen wie Windrichtung, Windgeschwindigkeit, Luftdichte, Außentemperatur, sowie deren zeitliche Änderung und weitere Angaben, Informationen zu vorliegenden Betriebsmodi, wie einem schallreduzierten Betrieb, Betrieb unter Berücksichtigung von Schattenwurf, dem Auftreten von Flugtieren oder ein Betrieb mit verringerter RADAR-Streuung, netzanschlussrichtlinien-relevanter Betriebsmodi, etc., sowie Zustandsinformationen und Messgrößen beliebiger Subsysteme der Windenergieanlage. Grundsätzlich ist unter den Begriffen jedweder Wert bzw. jedwede Information zu verstehen, wie sie auch bei der Regelung der Windenergieanlage durch ihren Regler berücksichtigt wird. Die Modelle sind so beschaffen, dass diese Simulationsergebnisse annähernd in Echtzeit bereitstellen können. Die Modelle werden daher in der gleichen Zeitauflösung und ohne zeitlichen Versatz mit den Eingangsgrößen beaufschlagt. Die Simulation des Wirkleistungsverhaltens kann beispielsweise so erfolgen, dass die Modelle in einem Taktzyklus von etwa 1000 Millisekunden Ausgangswerte für die modellierte Wirkleistung ermitteln und bereitstellen.

Bevorzugt besteht die Zuordnung von Modell der Windenergieanlage und dem Windenergieanlagenregler darin, dass das Modell auf die Parameter, Betriebsgrößen und Zustandsindikatoren direkt zugreifen kann oder letztere selbst aus den anliegenden Größen bildet, ohne dass eine Datenübertragung in oder durch den Windpark erfolgen muss. Die Parameter, Betriebsgrößen und Zustandsindikatoren können jedweden Datentyps sein, die in dem Windenergieanlagenregler zur Betriebsführung und Regelung der Windenergieanlage vorgesehenen sind.

In einer bevorzugten Ausgestaltung wird bei dem erfindungsgemäßen Verfahren die Gesamtstellgröße auf Anlagenstellgrößen der Windenergieanlagen in dem Windpark aufgeteilt. Die mit der additiven Vorsteuerung bestimmte Gesamtstellgröße wird bei dem erfindungsgemäßen Verfahren auf Anlagenstellgrößen aufgeteilt. Die aus der Aufteilung ermittelten Anlagenstellgrößen liegen dazu als Sollwerte für die durch die jeweilige Windenergieanlage bereitzustellende Wirkleistung an den Reglern der einzelnen Windenergieanlagen an. Als Anlagenstellgröße kann beispielsweise ein Wirkleistungssollwert oder ein prozentualer Wert, der sich auf die Nennleistung der jeweiligen Windenergieanlage oder auf deren aktuell verfügbare Wirkleistung bezieht, verwendet werden.

Die Aufteilung der Gesamtstellgröße auf die Anlagenstellgrößen erfolgt durch eine Regleraufteileinheit, an der die Gesamtstellgröße anliegt. Weiterhin liegt an der Regleraufteileinheit für jede der Windenergieanlagen jeweils wenigstens eine für die Aufteilung der Gesamtstellgröße heranziehbare Betriebsgröße, beispielsweise deren verfügbare Wirkleistung, an. Die Aufteilung der Gesamtstellgröße erfolgt in einer besonders bevorzugten Ausgestaltung des erfindungsgemäßen Verfahrens anhand von Werten für die verfügbare Wirkleistung der einzelnen Windenergieanlagen.

Bei dem erfindungsgemäßen Verfahren erfolgt an zwei Stellen eine Aufteilung von für den gesamten Windpark vorgegebenen Werten auf anlagenspezifische Werte. Eine Aufteilung erfolgt in der Aufteileinheit bei der Bildung der Wirkleistungssollwerte für die einzelnen Modelle der Windenergieanlagen. Die durch die entsprechenden Modelle jeweils modellierten Wirkleistungssollwerte der Windenergieanlagen werden unter Rückgriff auf Betriebsgrößen, Parameter und Zustandsindikatoren des Windenergieanlagenreglers modelliert. Die Modelle der Windenergieanlagen ermitteln abhängig von den anliegenden aufgeteilten Wirkleistungssollwerten jeweils den modellierte Wirkleistungssollwert, welcher an die Aufteileinheit übermittelt und der dann zusammen mit den anderen modellierten Wirkleistungssollwerten zu einem modellierten Wirkleistungssollwert des Windparks addiert wird. Die Gesamtheit der Modelle der Windenergieanlagen bildet das Verhalten des Windparks ab. Eine weitere Aufteilung erfolgt bei der Bereitstellung von Stellgrößen für die einzelnen Regler der Windenergieanlagen des Windparks durch die Regleraufteileinheit. Die aufgeteilten Stellgrößen werden aus der Gesamtstellgröße bestimmt. Die Aufteilung der Gesamtstellgröße auf die Anlagenstellgrößen kann beispielsweise anhand von verfügbaren Wirkleistungswerten erfolgen, die von den einzelnen Windenergieanlagen bzw. deren Reglern angegebenen werden. Ebenso kann die Aufteilung des Wirkleistungssollwerts des Windparks zur Modellierung durch Modelle der einzelnen Windenergieanlagen anhand der von den einzelnen Windenergieanlagen angegebenen verfügbaren Wirkleistung erfolgen. In einer bevorzugten Weiterbildung werden die Anlagenstellgrößen durch die Regleraufteileinheit anhand der gleichen Größen bestimmt, auf deren Basis die Sollwerte für die Simulation durch die einzelnen Anlagen durch die Aufteileinheit ermittelt werden. Besonders bevorzugt erfolgt die Aufteilung in beiden Fällen anhand der verfügbaren Wirkleistungen der einzelnen Windenergieanlagen.

In einer Weiterbildung liegt jeweils mindestens eine Betriebsgröße, Parameter und/oder Zustandsindikator der Windenergieanlagen an den jeweiligen Modellen der Windenergieanlagen an, um eine Abweichung zwischen Istwert der Wirkleistung der Windenergieanlage und dem modellierten Leistungswert zu minimieren. Ebenfalls bevorzugt liegt anstelle oder zusätzlich zu der verfügbaren Wirkleistung mindestens eine weitere Betriebsgröße, ein weiterer Parameter oder Zustandsindikator der Windenergieanlagen an der Aufteileinheit an, um diese bei der Aufteilung des Sollwerts für den Windpark auf die Sollwerte für die Simulation durch die einzelnen Modelle der Windenergieanlagen zu berücksichtigen. Bevorzugt handelt es sich bei der weiteren Betriebsgröße, dem weiteren Parameter bzw. Zustandsindikator um eine Information über einen in den jeweiligen Windenergieanlagen aktiven Betriebsmodus. Zur Informationsreduktion können Betriebsmodi in der Aufteileinheit definiert werden. Beispiele für einen solchen Modus sind ein schallreduzierter Betrieb, ein leistungsreduzierter Betrieb aufgrund eines defekten Bauteils oder ein leistungsreduzierter Betrieb aufgrund einer Betriebstemperatur. Grundsätzlich können solche Modi jedweden eine spezifische Windenergieanlage betreffenden Zustand beschreiben. Alternativ oder ergänzend können als weitere Größen auch wenige ausgewählte Betriebsgrößen, Parameter und/oder Zustandsindikatoren von den einzelnen Windenergieanlagen bereitgestellt werden z.B. eine Information über eine aktuelle Drehzahl. Für komplexe Modellierungsverfahren muss das Windparknetzwerk nicht für große Datenvolumen ausgelegt werden, da die Modellierung vollständig lokal an den Windenergieanlagen erfolgt. Die Übermittlung einer oder weniger zusätzlicher Betriebsgrößen, Parameter und/oder Zustandsindikatoren würde den Datenverkehr in dem Windparknetzwerk nur unwesentlich erhöhen und kann zu einer Optimierung der initialen Aufteilung beitragen. Das Zurückgreifen auf Betriebsgrößen, Parameter und/oder Zustandsindikatoren durch die Modelle bedeutet nicht, dass hier eine Regelung von Größen des Windparks auf Ebene der einzelnen Windenergieanlagen erfolgt. Vielmehr dienen diese Größen der Windenergieanlagen dazu, dass das aktuelle Verhalten der Windenergieanlagen, welches stark lokal und individuellen Einflüssen unterworfen ist, bei der Modellierung zu berücksichtigen und Abweichungen durch einen falschen gewählten Modellansatz vermieden werden können. Mithilfe des Zugriffs auf diese Größen werden Fehler bei der Modellbildung minimiert und das dynamische Verhalten der einzelnen Windenergieanlagen besser abgebildet. Der modellierte Wirkleistungssollwert einer einzelnen Windenergieanlage ist, genau wie die von der Windenergieanlage tatsächlich eingespeiste Wirkleistung von aktuellen Betriebsgrößen / Betriebsmodi abhängig.

Die erfindungsgemäße Aufgabe wird ebenfalls durch einen Windpark mit den Merkmalen aus Anspruch 6 gelöst. Der erfindungsgemäße Windpark weist mindestens zwei Windenergieanlagen auf, ferner einen Windparkregler, an dem ein extern vorgegebener Wirkleistungssollwert für die von dem Windpark an seinem Netzverknüpfungspunkt einzuspeisende Wirkleistung anliegt. Der Windparkregler weist eine Vorsteuereinheit auf, die unabhängig von Betriebszuständen des Windparks und deren Istwerten eine Vorsteuerstellgröße ermittelt. Ferner weist der Windparkregler eine Aufteileinheit auf, die vorgesehen und eingerichtet ist, um aus dem Sollwert der von dem Windpark abzugebenden Wirkleistung einen modellierten Wirkleistungssollwert des Windparks zu erzeugen. Die Aufteileinheit ist zu diesem Zweck eingerichtet, Wirkleistungssollwerte als Eingangsgrößen für eine Modellierung durch Modelle der einzelnen Windenergieanlagen zu ermitteln und diesen bereitzustellen. Die Aufteileinheit ist weiterhin eingerichtet, die modellierten Wirkleistungssollwerte als Ausgangsgrößen der einzelnen Modelle zu empfangen, zu einem modellierten Wirkleistungswert des Windparks zu summieren und einem Differenzglied bereitzustellen. Das Differenzglied ist eingerichtet, aus dem modellierten Wirkleistungssollwert des Windparks und einem Istwert der von dem Windpark abgegebenen Wirkleistung eine Regeldifferenz zu ermitteln. Ferner ist ein Leistungsregler eingerichtet, aus der Regeldifferenz eine Reglerstellgröße zu ermitteln. Ein weiterhin vorgesehenes Summationsglied ist eingerichtet, um aus der Vorsteuerstellgröße und der Reglerstellgröße eine Gesamtstellgröße für den Windpark zu ermitteln und einer Regleraufteileinheit bereitzustellen. Die Regleraufteileinheit ist vorgesehen und eingerichtet, abhängig von der anliegenden Gesamtstellgröße für den Windpark Wirkleistungssollwerte für die einzelnen Windenergieanlagen des Windparks zu ermitteln und den jeweiligen Windenergieanlagen als bereitzustellen. Alternativ zu den Wirkleistungssollwerten für die einzelnen Windenergieanlagen können auch für die Wirkleistung charakteristische Anlagenstellgrößen, beispielsweise ein prozentualer Wert, der sich auf die Nennleistung der jeweiligen Windenergieanlage oder auf deren aktuell verfügbare Wirkleistung bezieht, für Regler der Windenergieanlagen bereitgestellt werden. Die einzelnen Windenergieanlagen des Windparks weisen jeweils einen der Regler auf, der vorgesehen und eingerichtet ist, die jeweilige Windenergieanlage zu regeln. Die Regler sind insbesondere dazu eingerichtet, die Wirkleistungsabgabe der jeweiligen Windenergieanlage abhängig von dem durch die Regleraufteileinheit bereitgestellten Wirkleistungssollwert oder der Anlagenstellgröße zu regeln. Weiterhin weisen die Windenergieanlagen jeweils ein Modell auf, das eingerichtet ist, das Verhalten der jeweiligen Windenergieanlage in Abhängigkeit anliegender Eingangsgrößen zu simulieren. An den jeweiligen Anlagenmodellen liegt dazu als Eingangsgröße jeweils ein Anteil von dem Wirkleistungssollwert oder dem dafür repräsentativen Wert für den Windpark an. Die Modelle der einzelnen Windenergieanlagen sind eingerichtet, abhängig von dem jeweils vorgegebenen Anteil als Ausgangsgröße einen modellierten Wirkleistungssollwert oder den dafür repräsentativen Wert der durch die jeweilige Windenergieanlage zu erzeugenden Wirkleistung zu ermitteln und der Aufteileinheit bereitzustellen.

Unter dem extern vorgegeben Wirkleistungssollwert werden im Zusammenhang mit der vorliegenden Erfindung auch Sollwerte verstanden, die windparkintern ermittelt werden. Beispielsweise kann vorgesehen sein, dass der Windparkregler den Sollwert basierend auf externen Vorgaben ermittelt, die in dem Regler berücksichtigt sind. So kann beispielsweise eine Kennlinie für den Wirkleistungssollwert in Abhängigkeit von der Netzfrequenz vorgegeben sein, auf Basis derer der Windparkregler abhängig von einer anliegenden, am Netzverknüpfungspunkt des Windparks gemessenen Frequenz, den Wirkleistungssollwert abhängig von externen Vorgaben, bestimmt.

Der extern vorgegebene Wirkleistungssollwerk kann aber auch direkt von dem Betreiber des Energieversorgungsnetzes bereitgestellt werden.

In dem erfindungsgemäßen Windpark sind die Modelle der Windenergieanlagen den Windenergieanlagenreglern zugeordnet, so dass Betriebsgrößen, Parameter und/oder Zustandsindikatoren aus den Windenergieanlagenreglern nicht durch den Windpark übertragen werden müssen, sondern das Modell der Windenergieanlage bevorzugt direkt auf diese zugreifen kann. In einer bevorzugten Ausgestaltung sind die Anlagenmodelle eingerichtet, das Verhalten der jeweiligen einzelnen Windenergieanlagen abhängig von den anliegenden Größen zu modellieren. Die Modelle können bevorzugt auf den jeweiligen Windenergieanlagenreglern ausgeführt werden. Alternativ kann den Reglern auch eine weitere Datenverarbeitungseinrichtung zugeordnet sein, die über eine Schnittstelle mit dem Regler verbunden ist, oder an der die gleichen Eingangsgrößen wie an dem Regler anliegen. Beispielsweise kann der Regler redundant ausgeführt sein, so der zweite Regler im Normalzustand lediglich die Simulation durchführt und im Falle, dass der erste Regler ausfällt, als Backup für diesen eingesetzt werden kann, so dass zudem ein Ausfall der Windenergieanlage vermieden werden kann.

Die durch den Windpark zu erzeugende Wirkleistung wird als Wirkleistungssollwert für die Simulation durch eine Aufteileinheit auf die Modelle der einzelnen Windenergieanlagen aufgeteilt, wobei die Modelle eingerichtet sind, abhängig von den anliegenden aufgeteilten Wirkleistungssollwerten sowie abhängig von wenigstens einer anliegenden Betriebsgröße der modellierten Windenergieanlage, basierend auf dem entsprechenden Anlagenmodell, einen modellierten Wirkleistungssollwert für die von den modellierten Anlagen zu erzeugende Wirkleistung zu ermitteln. Die Aufteileinheit ist eingerichtet, den vorgegebenen Wirkleistungssollwert des Windparks auf die Modelle für die im Windpark enthaltenen Windenergieanlagen aufzuteilen. Die Aufteilung kann beispielsweise anhand von verfügbaren Wirkleistungswerten erfolgen, die von den einzelnen Windenergieanlagen bzw. deren Reglern angegebenen werden und als Eingangsgrößen an der Aufteileinheit anliegen. Alternativ oder ergänzend können als weitere Größen auch wenige ausgewählte Betriebsgrößen, Parameter und/oder Zustandsindikatoren von den einzelnen Windenergieanlagen bereitgestellt werden z.B. eine Information über eine aktuelle Drehzahl. Für komplexe Modellierungsverfahren muss das Windparknetzwerk nicht für große Datenvolumen ausgelegt werden, da die Modellierung vollständig lokal an den Windenergieanlagen erfolgt. Die Übermittlung einer oder weniger zusätzlicher Betriebsgrößen, Parameter und/oder Zustandsindikatoren würde den Datenverkehr in dem Windparknetzwerk nur unwesentlich erhöhen und kann zu einer Optimierung der initialen Aufteilung beitragen.

Die Regleraufteileinheit des Windparkreglers ist eingerichtet, die Gesamtstellgröße für die von dem Windpark abzugebende Wirkleistung auf für die einzelnen Windenergieanlagen vorgesehenen Sollwerte aufzuteilen und einen entsprechenden Wirkleistungssollwert für die einzelnen Windenergieanlagen bzw. deren Regler bereitzustellen. Die Aufteilung, sei es der Gesamtstellgröße oder des Wirkleistungssollwerts, erfolgt bevorzugt anhand der von den einzelnen Windenergieanlagen als verfügbar gemeldeten Wirkleistung, also abhängig vom Betriebszustand der einzelnen Anlagen. In Abhängigkeit der Vorsteuerung und der verwendeten Modelle kann erreicht werden, dass die modellierten Sollwerte für die einzelnen Anlagen und die von der Regleraufteileinheit für die einzelnen Anlagen bereitgestellten Sollwerte auch bei starken Änderungen des Eingangs an dem Windparkregler anliegenden Sollwertes nur geringfügig voneinander abweichen.

Die zuvor benannten Einheiten des Windparks sind datenkommunikativ auf bekannte Art und Weise, z.B. über ein Windparknetzwerk miteinander verbunden. Für die Kommunikation in dem Windparknetzwerk können beliebige bekannte Protokolle eingesetzt werden. Einzelne Elemente des zuvor beschriebenen Reglers können baulich in einer Baugruppe vereinigt bzw. als Softwaremodule in einer Baugruppe ausgeführt werden. Beispielsweise können Aufteileinheit, Additions- und Subtraktionsglieder, Leistungsregler, Regleraufteileinheit und Vorsteuereinheit in einem Windparkregler zusammengefasst sein.

Ein besonderer Vorteil des erfindungsgemäßen Windparks besteht darin, dass die Regelung der durch den Windpark einzuspeisenden Wirkleistung über die Modelle, welche die Betriebszustände der einzelnen Windenergieanlagen in annähernd Echtzeit berücksichtigen, auf die erzeugenden Windenergieanlagen heruntergebrochen wird, und so eine bessere Dynamik der Regelung erreicht werden kann, ohne dass dafür die Datenübertragungskapazität des Windparknetzwerkes erweitert werden muss. Durch die Berücksichtigung einzelner Größen der Windenergieanlagen bei der Aufteilung für die Modellierung sowie die Vorsteuerung nähert sich der modellierte Wirkleistungssollwert des Windparks an den Istwert der am Netzverknüpfungspunkt des Windparks eingespeisten Wirkleistung an und die Regeldifferenz an dem Subtraktionsglied konvergiert gegen Null. Das Modell kompensiert bzw. reduziert so eine unzureichende Dynamik des Leistungsreglers. Bei einer Implementierung der Modelle in den vorhandenen Reglern der Windenergieanlagen, werden Mehrkosten vermieden.

Ein bevorzugtes Ausführungsbeispiel der Erfindung wird nachfolgend erläutert. Die einzige Figur zeigt ein Blockschaltbild eines Windparks mit einer Vorsteuerung und einer Aufteilung der Stellgrößen auf die einzelnen Windenergieanlagen.

Die Figur zeigt in einem Blockschaltbild, wie ein extern vorgegebener Wirkleistungssollwert des Windparks P_{set,global} an eine Begrenzungs- und Rampeneinheit 10 eines Windparkreglers 70 angelegt wird. Der Wirkleistungssollwert des Windparks P_{set,global} ist ein extern vorgegebener Sollwert für die von dem Windpark abzugebende Wirkleistung. Dieser extern vorgegebene Sollwert wird in dem Ausführungsbeispiel durch eine logisch übergeordnete Einheit des Netzbetreibers dem Windpark vorgegeben. Dieser vorgegebene Sollwert ist soweit und so genau wie möglich bei gegebenen Windverhältnissen einzuhalten. In der Rampen- und Begrenzungseinheit 10 wird der von Extern vorgegebene Wirkleistungssollwert für den Windpark auf die für den Windpark möglichen Sollwerte und Sollwertsprünge begrenzt. Ebenso werden Änderungen in dem vorgegebenen Wirkleistungssollwert durch Rampen verstetigt. Fachsprachlich kann der extern vorgegebene Wirkleistungssollwert als eine Führungsgröße angesehen werden, die durch die Rampen- und Begrenzungseinheit in einen windparkinternen Sollwert Pₛₑₜ umgesetzt wird. Der so verstetigte Sollwert für die Wirkleistung Pₛₑₜ liegt an einer Aufteileinheit 20 des Windparkreglers 70 an. Die Aufteileinheit 20 erzeugt einen modellierten Wirkleistungssollwert für den Windpark P'ₛₑₜ. Der modellierte Wirkleistungssollwert gibt die auf einer Modellierung der einzelnen Windenergieanlagen beruhende Antwort des Windparks auf den internen Wirkleistungssollwert Pₛₑₜ an. Der modellierte Wirkleistungssollwert P'ₛₑₜ kann als ein erwarteter Istwert angesehen werden, der angibt, welcher Istwert als Antwort auf den Sollwert erzeugt wird. Aus dem modellierten Wirkleistungssollwert P'ₛₑₜ und dem gemessenen Istwert der am Netzverknüpfungspunkt des Windparks eingespeisten Wirkleistung P_{act} wird durch ein Subtraktionsglied des Windparkreglers 70 eine Regeldifferenz e gebildet. Die Regeldifferenz e ist die Differenz aus modelliertem Wirkleistungssollwert und Istwert der abgegebenen Wirkleistung. Über einen Leistungsregler 30 des Windparkreglers 70 wird aus der Regelgröße e eine Reglerstellgröße u_{reg} ermittelt. Der Leistungsregler 30 ist dazu mit einer entsprechenden Kennlinie parametriert. Stimmen die Ergebnisse der Modelle mit dem realen Verhalten des Windparks überein und befindet sich der Windparkregler 30 somit in seinem eingeschwungenen Zustand, so wird die Regelgröße e im Wesentlichen verschwinden (gleich Null sein) und damit auch die Reglerstellgröße u_{reg}.

Die Gesamtstellgröße u wird gebildet durch ein Summationsglied des Windparkreglers 70, welches die Summe der durch eine Vorsteuereinheit 60 des Windparkreglers 70 ermittelten Vorsteuerstellgröße u_{ff} und der Reglerstellgröße u_{reg} bildet. Die Aufschaltung der Vorsteuereinheit 60 erfolgt additiv. Im Rahmen der Vorsteuerung ist es möglich, den Leistungsregler 30 mit seinen Zeitkonstanten und seinem Ansprechverhalten entsprechend den üblicherweise in einem Windpark auftretenden Störgrößen zu dimensionieren. Die Gesamtstellgröße u für den Windpark wird in einer Regleraufteileinheit 40 des Windparkreglers 70 auf die einzelnen Stellgrößen u_{wea,1}, u_{wea,2}, ..., u_{wea,n} aufgeteilt, die die Stellgrößen für die einzelnen Windenergieanlagen in dem Windpark bilden.

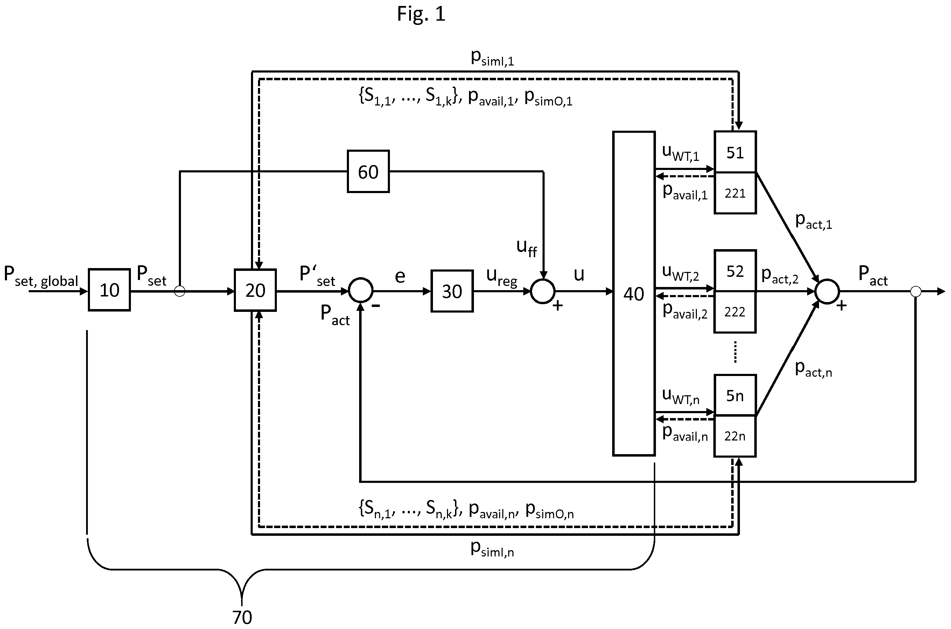

Jede Windenergieanlage in dem Windpark besitzt einen Regler. Die Regler der Windenergieanlagen 51, 52, ..., 5n sind in Fig. 1 schematisch dargestellt. Bei der Aufteilung der Stellgrößen u_{wea,1}, u_{wea,2}, ..., u_{wea,n} durch die Regleraufteileinheit 40 werden die Stellgrößen so auf die einzelnen Windenergieanlagen aufgeteilt, dass diese in Summe der Gesamtstellgröße u entsprechen und die Windenergieanlagen ansprechend auf die Stellgrößen Wirkleistungen p_{act,i} bereitstellen, die in Summe am Netzverknüpfungspunkt des Windparks dem Istwert der Wirkleistung P_{act} entsprechen. Zu der von dem Windpark abzugebenden Wirkleistung liefert jede Windenergieanlage _{[HA1]}einen Beitrag. Bei der Aufteilung der Gesamtstellgröße u kann beispielsweise berücksichtigt werden, dass die in dem Windpark zugefassten Windenergieanlagen unterschiedliche Betriebszustände besitzen können. Auch Leistungsreserven, Wartungsarbeiten und andere anlagenspezifische Größen und Vorgaben können hier berücksichtigt werden. Um dem extern vorgegebenen Wirkleistungssollwert möglichst schnell folgen zu können, können beispielsweise auch unterschiedliche Regelungszeiten der einzelnen Windenergieanlagen bei der Aufteilung berücksichtigt werden. Eine schnelle Regelung lässt sich beispielsweise sicherstellen, wenn die Aufteilung des Sollwerts u auf die einzelnen Anlagen anhand der von den einzelnen Anlagen als verfügbar gemeldete Leistung p_{avail,1}, p_{avail,2}, ..., p_{avail,n} erfolgt.

Die Aufteileinheit 20 teilt den Sollwert für den Windpark Pₛₑₜ auf Sollwerte bzw. Eingangswerte für die Simulation durch die Modelle der einzelnen Windenergieanlagen p_{siml,1}, p_{siml,2}, ..., p_{siml,n} auf. Die aufgeteilten Sollwerte liegen an dem jeweiligen Modell der Windenergieanlage 221, 222, ...22n an. Ausgangsgrößen der Modelle zu den Windenergieanlagen sind die modellierten Wirkleistungssollwerte der Windenergieanlagen p_{simO,1}, p_{simO,2}, ..., p_{simO,n}. Diese Größen werden an die Aufteileinheit 20 übermittelt und durch diese zu dem modellierten Wirkleistungswert P'ₛₑₜ aufaddiert.

Die Modelle 221, 222, ..., 22n entsprechen dabei jeweils Modellen der einzelnen Windenergieanlagen, die auf den Windenergieanlagen, bevorzugt durch deren Regler 51, 52, ..., 5n ausgeführt werden.

Ein wichtiger Aspekt in dem dargestellten Ausführungsbeispiel besteht darin, dass die modellierten Wirkleistungen der einzelnen Windenergieanlagen p_{simO,i} ungefähr den Wirkleistungsistwerten der Windenergieanlage P_{act,i} entsprechen. Dies bedeutet, dass die Aufteilung des Sollwerts Pₛₑₜ für die Simulation komplementär zu der Aufteilung der Stellgröße u auf die einzelnen Windenergieanlagen erfolgt.

Ein besonderer Vorteil wird für die Datenverbindung zwischen der Aufteileinheit 20 und den Modellen der Windenergieanlagen 221, 222 ... 22n deutlich. Betrachtet man ein beliebiges Modell 22i der i-ten Windenergieanlage, so wird p_{simI,i} von der Aufteileinheit zu dem Modell 22i übertragen. An dem Modell liegen durch den Windenergieanlagenregler 5i alle notwendigen Informationen vor, um den Sollwert p_{simO,i} zu modellieren. Von dem Windenergieanlagenregler 5i und/oder dem Windenergieanlagenmodell 22i werden eine oder wenige ausgewählte Betriebsgrößen S_{i,1},S_{i,2}, ...S_{i,k} an die Aufteileinheit 20 übertragen, wo sie bei der Aufteilung der Sollwerte berücksichtigt werden können. Ebenfalls kann die an der i-ten Windenergieanlage verfügbare Wirkleistung p_{avail,i} mit übertragen werden, um die Größe bei der Aufteilung der Sollwerte auf die Anlagen zu berücksichtigen.

### Bezugszeichenliste

- 10: Begrenzungs- u. Rampeneinheit
- 20: Aufteileinheit
- 221: Modell der 1. Windenergieanlage
- 222: Modell der 2. Windenergieanlage
- 22n: Modell der n-ten Windenergieanlage
- 30: Leistungsregler
- 40: Regleraufteileinheit
- 51: Regler der 1. Windenergieanlage
- 52: Regler der 2. Windenergieanlage
- 5n: Regler der n-ten Windenergieanlage
- 60: Vorsteuereinheit
- 70: Windparkregler
- P_{set, global}: extern vorgegebener Wirkleistungssollwert des Windparks
- Pₛₑₜ: interner Wirkleistungssollwert des Windparks
- p_{siml,1}: auf die 1. Windenergieanlage für die Modellierung aufgeteilter Wirkleistungssollwert
- p_{siml,2}: auf die 2. Windenergieanlage für die Modellierung aufgeteilter Wirkleistungssollwert
- p_{siml,n}: auf die n-te Windenergieanlage für die Modellierung aufgeteilter Wirkleistungssollwert
- p_{simO,1}: modellierter Wirkleistungssollwert der 1. Windenergieanlage
- p_{simO,2}: modellierter Wirkleistungssollwert der 2. Windenergieanlage
- p_{simO,n}: modellierter Wirkleistungssollwert der n-ten Windenergieanlage
- P'ₛₑₜ: modellierter Wirkleistungssollwert des Windparks
- P_{act}: Istwert der am Netzverknüpfungspunkt des Windparks eingespeisten Wirkleistung
- e: Regeldifferenz zwischen modelliertem Wirkleistungssollwert und Istwert der abgegebenen Wirkleistung des Windparks
- u_{reg}: Reglerstellgröße
- u_{ff}: Vorsteuerstellgröße
- u: Gesamtstellgröße als Summe aus Vorsteuerstellegröße und Reglerstellgröße
- u_{WT,1}: aufgeteilte Stellgröße für die 1. Windenergieanlage
- u_{WT,2}: aufgeteilte Stellgröße für die 2. Windenergieanlage
- u_{WT,n}: aufgeteilte Stellgröße für die n-te Windenergieanlage
- p_{avail,1}: verfügbare Wirkleistung der 1. Windenergieanlage
- p_{avail,2}: verfügbare Wirkleistung der 2. Windenergieanlage
- p_{avail,n}: verfügbare Wirkleistung der n-ten Windenergieanlage
- p_{act,1}: Wirkleistungsistwert der 1. Windenergieanlage
- p_{act,2}: Wirkleistungsistwert der 2. Windenergieanlage
- p_{act,n}: Wirkleistungsistwert der n-ten Windenergieanlage
- {S_{1,1}, ..., S_{1,k}}: Menge von k-Betriebsgrößen der 1. Windenergieanlage
- {S_{n,1}, ..., S_{n,k}}: Menge von k-Betriebsgrößen der n-ten Windenergieanlage

## Patentansprüche

1. Verfahren zur Regelung einer Wirkleistung in einem Windpark mit mindestens zwei Windenergieanlagen, deren Leistungsabgabe durch jeweils einen Windenergieanlagenregler (51,...,5n) geregelt wird, wobei ein Sollwert der von dem Windpark abzugebenden Wirkleistung (Pₛₑₜ, P_{set,global}) an einer Aufteileinheit (20) anliegt, die den anliegenden Sollwert der von dem Windpark abzugebenden Wirkleistung (Pₛₑₜ, P_{set,global}) auf Wirkleistungssollwerte für die Simulation durch die einzelnen Windenergieanlagen (p_{simI,1}, p_{simI,2}..., p_{simI,n}) aufteilt, modellierte Wirkleistungssollwerte der Windenergieanlagen (p_{simO,1}, p_{simO,2}, p_{simO,n}) empfängt und aus den empfangenen Wirkleistungssollwerten der Windenergieanlagen (p_{simO,1}, p_{simO,2}, p_{simO,n}) durch Summation einen modellierten Wirkleistungssollwert des Windparks (P'ₛₑₜ) erzeugt, der zusammen mit einem Istwert der von dem Windpark abgegebenen Wirkleistung (P_{act}) an einem Subtraktionsglied anliegt, das eine Regeldifferenz (e) für einen Leistungsregler (30) bereitstellt, der eine Reglerstellgröße (u_{reg}) erzeugt, zu der eine unabhängig von Betriebszuständen der Windenergieanlagen und deren Istwerten bestimmte Vorsteuerstellgröße (u_{ff}) zu einer Gesamtstellgröße (u) addiert wird, wobei der Wirkleistungssollwert des Windparks (Pₛₑₜ, P_{set,global}) auf Modelle (221, 222, 22n) der in dem Windpark enthaltenen Windenergieanlagen aufgeteilt wird und die Modelle (221, 222, 22n) der Windenergieanlagen den jeweils einen modellierten Wirkleistungssollwert der jeweiligen Windenergieanlage (p_{simO,1}, p_{simO,2}, p_{simO,n}), abhängig von dem für das jeweilige Modell aufgeteilten Anteil des Wirkleistungssollwerts (p_{simI,1}, p_{simI,2}, p_{simI,n}) bestimmen, wobei die Modelle (221, 222, 22n) der Windenergieanlagen den jeweiligen Windenergieanlagenreglern (51, 52, ..5n) zugeordnet sind.

2. Verfahren nach Anspruch 1, **dadurch gekennzeichnet, dass** die Modelle (221, 222, 22n) der Windenergieanlagen auf mindestens eine Betriebsgröße, einen Parameter und/oder einen Zustandsindikator der jeweiligen Windenergieanlage zurückgreifen.

3. Verfahren zur Regelung nach Anspruch 1 oder 2, **dadurch gekennzeichnet, dass** das Verhalten des Windparks durch die Gesamtheit der Modelle (221, 222, 22n) der Windenergieanlagen abgebildet wird.

4. Verfahren nach einem der Ansprüche 1 bis 3, **dadurch gekennzeichnet, dass** die Gesamtstellgröße (u) auf Stellgrößen für die einzelnen Windenergieanlagen (u_{WT,1}, U_{WT,2}, u_{WT,n}) aufgeteilt wird.

5. Verfahren nach Anspruch 4, **dadurch gekennzeichnet, dass** die Gesamtstellgröße (u) abhängig von der jeweils verfügbaren Wirkleistung (p_{avail,1}, p_{avail,2}, ...) für die einzelnen Windenergieanlagen (u_{WT,1}, u_{WT,2}, ...) aufgeteilt wird.

6. Verfahren nach einem der Ansprüche 1 bis 5, **dadurch gekennzeichnet, dass** die Aufteileinheit (20) den anliegenden Sollwert (Pₛₑₜ, P_{set,global}) der von dem Windpark abzugebenden Wirkleistung abhängig von mindestens einer Größe aufteilt, die aus den folgenden Größen ausgewählt ist: eine Betriebsgröße, ein Parameter und ein Zustandsindikator der Windenergieanlage.

7. Windpark mit mindestens zwei Windenergieanlagen und einem Windparkregler (70), an dem ein Sollwert für die von dem Windpark abzugebende Wirkleistung (Pₛₑₜ, P_{set,global}) zur Steuerung der in dem Windpark enthaltenen Windenergieanlagen anliegt, wobei der Windparkregler (70) Folgendes aufweist:
- eine Vorsteuereinheit (60), die eingerichtet ist, unabhängig von Betriebszuständen der Windenergieanlagen des Windparks und deren Istwerten, eine Vorsteuerstellgröße (u_{ff}) zu ermitteln, und
- eine Aufteileinheit (20), die eingerichtet ist, den Sollwert der von dem Windpark abzugebenden Wirkleistung auf Wirkleistungssollwerte für einzelne Windenergieanlagen (p_{simI,1}, p_{simI,2}..., p_{simI,n}) aufzuteilen, modellierte Wirkleistungssollwerte der Windenergieanlagen (p_{simO,1}, p_{simO,2}..., p_{simO,n}) zu empfangen und aus den empfangenen Wirkleistungssollwerten der Windenergieanlagen (p_{simO,1}, p_{simO,2}..., p_{simO,n}) durch Summation einen modellierten Wirkleistungssollwert (P'ₛₑₜ) des Windparks zu ermitteln,
- ein Subtraktionsglied, das eingerichtet ist, aus dem modellierten Wirkleistungswert (P'ₛₑₜ) des Windparks und einem Istwert der von dem Windpark abgegebenen Wirkleistung (P_{act}) eine Regeldifferenz (e) zu ermitteln,
- einen Leistungsregler (30), der eingerichtet ist, aus der Regeldifferenz (e) eine Reglerstellgröße (u_{reg}) zu ermitteln, und
- ein Summationsglied, das eingerichtet ist, aus der Vorsteuerstellgröße (u_{ff}) und der Reglerstellgröße (u_{reg}) eine Gesamtstellgröße (u) für den Windpark zu ermitteln,
- wobei die in dem Windpark enthaltenen Windenergieanlagen jeweils ein Modell der Windenergieanlage (221, 222, 22n) aufweisen, an dem der aufgeteilte Wirkleistungssollwert für die Windenergieanlage (p_{simI}) anliegt und das dem jeweiligen Windenergieanlagenregler (51, 52, 5n) zugeordnet ist und einen modellierten Wirkleistungssollwert der Windenergieanlage (p_{simO}) bestimmt.

8. Windpark nach Anspruch 7, **dadurch gekennzeichnet, dass** jedes der Modelle der Windenergieanlage (221, 222, 22n) auf mindestens eine Betriebsgröße, einen Parameter und/oder einem Zustandsindikator der jeweiligen Windenergieanlage zugreifen kann.

9. Windpark nach einem der Ansprüche 7 bis 8, **dadurch gekennzeichnet, dass** eine Regleraufteileinheit (40) vorgesehen ist, die die Gesamtstellgröße (u) auf Stellgrößen für die einzelnen Windenergieanlagen (u_{WT,1}, u_{WT,2}, u_{WT,n}) aufteilt.

10. Windpark nach Anspruch 9, **dadurch gekennzeichnet, dass** die Regleraufteileinheit (40) die Gesamtstellgröße (u) abhängig von der jeweils verfügbaren Wirkleistung (p_{avail,1}, p_{avail,2}, ...) für die einzelnen Windenergieanlagen (u_{WT,1}, u_{WT,2}, ...) aufteilt.

11. Windpark nach einem der Ansprüche 7 bis 10, **dadurch gekennzeichnet, dass** die Aufteileinheit (20) den anliegenden Sollwert der von dem Windpark abzugebenden Wirkleistung abhängig von mindestens einer Größe aufteilt, die an den folgenden Größen ausgewählt ist: eine Betriebsgröße, ein Parameter und ein Zustandsindikator der Windenergieanlage.

## Claims

1. Method for regulating an active power in a wind farm with at least two wind turbines whose power output is regulated in each case by a wind turbine controller (51, ..., 5n), wherein a target value for the active power (Pₛₑₜ, P_{set, global}) which is to be delivered by the wind farm being supplied to a dividing unit (20) which divides the supplied target value of the active power (Pₛₑₜ, P_{set, global}) which is to be delivered by the wind farm into active power target values for the simulation by the individual wind turbines (p_{simI,1}, p_{simI,2}..., p_{simI,n}), receives modelled active power target values of the wind turbines (p_{simO,1}, p_{simO,2}, p_{simO,n}) and from the received active power target values of the wind turbines (p_{simO,1}, p_{simO,2}, p_{simO,n}) generates a modelled active power target value of the wind farm (P'ₛₑₜ) by summation, which, together with an actual value of the active power (P_{act}) output by the wind farm, is applied to a subtraction element, which provides a control difference (e) for a power controller (30) which generates a controller manipulated variable (u_{reg}) to which a pilot control manipulated variable (u_{ff}) which is determined independently of operating states of the wind turbines and their actual values is added to form a total manipulated variable (u), wherein the active power target value of the wind farm (Pₛₑₜ, P_{set, global}) is divided for models (221, 222, 22n) of the wind turbines contained in the wind farm and the models (221, 222, 22n) of the wind turbines determine the respective modelled active power target value of the respective wind turbine (p_{simO,1}, p_{simO,2}, p_{simO,n}) as a function of the portion of the active power target value (p_{simI,1}, p_{simI,2}, p_{simI,n}) divided for the respective model, wherein the models (221, 222, 22n) of the wind turbines are assigned to the respective wind turbine controllers (51, 52, ..5n).

2. Method according to claim 1, **characterized in that** the models (221, 222, 22n) of the wind turbines can access at least one operating variable, one parameter and/or one status indicator of the respective wind turbine.

3. Method for regulation according to claim 1 or 2, **characterized in that** the performance of the wind farm is represented by the totality of the models (221, 222, 22n) of the wind turbines.

4. Method according to one of claims 1 to 3, **characterized in that** the total manipulated variable (u) is divided into manipulated variables for the individual wind turbines (u_{WT,1}, u_{WT,2}, u_{WT,n}).

5. Method according to claim 4, **characterized in that** the total manipulated variable (u) is divided depending on the respectively available active power (p_{avail,1}, p_{avail,2}, ...) for the individual wind turbines (u_{WT,1}, u_{WT,2}, ...).

6. Method according to one of the claims 1 to 5, **characterized in that** the dividing unit (20) divides the applied target value (Pₛₑₜ, P_{set, global}) of the active power to be delivered by the wind farm as a function of at least one variable which is selected from the following variables: an operating variable, a parameter and a status indicator of the wind turbine.

7. Wind farm having at least two wind turbines and one wind farm controller (70), to which a target value for the active power (Pₛₑₜ, P_{set, global}) to be delivered by the wind farm is applied for controlling the wind turbines contained in the wind farm, the wind farm controller (70) comprising the following:
- a pilot control unit (60) configured to determine a pilot control manipulated variable (u_{ff}) independently of operating states of the wind turbines of the wind farm and their actual values, and
- a dividing unit (20) which is configured to divide the target value of the active power to be delivered by the wind farm into active power target values for individual wind turbines (p_{simI,1}, p_{simI,2}..., p_{simI,n}), to receive modeled active power target values of the wind turbines (p_{simO,1}, p_{simO,2}..., p_{simO,n}) and to determine a modeled active power target value of the wind turbines (p_{simO,2}..., p_{simI,2}..., p_{simI,n}) by summation,
- a power controller (30) configured to determine a controller manipulated variable (u_{reg}) from the control difference (e), and
- a summation element configured to determine a total manipulated variable (u) for the wind farm from the pilot control variable (u_{ff}) and the controller control variable (u_{reg}),
- wherein the wind turbines contained in the wind farm each comprise a model of the wind turbine (221, 222, 22n) to which the divided active power target value for the wind turbine (51, 52, 5n) is assigned, and which determines a modelled active power target value of the wind turbine (p_{simO}).

8. Wind farm according to claim 7, **characterized in that** each of the models of the wind turbine (221, 222, 22n) can access at least one operating variable, a parameter and/or a status indicator of the respective wind turbine.

9. Wind farm according to one of claims 7 to 8, **characterized in that** a controller dividing unit (40) is provided which divides the total manipulated variable (u) into manipulated variables for the individual wind turbines (u_{WT,1}, u_{WT,2}, u_{WT,n}).

10. Wind farm according to claim 9, **characterised in that** the controller dividing unit (40) divides the total manipulated variable (u) as a function of the respectively available active power (p_{avail,1}, p_{avail,2}, ...) for the individual wind turbines (u_{WT,1}, u_{WT,2}, ...).

11. Wind farm in according to one of the claims 7 to 10, **characterized in that** the dividing unit (20) divides the present target value of the active power to be delivered by the wind farm as a function of at least one variable selected from the following variables: an operating variable, a parameter and a status indicator of the wind turbine.

## Revendications

1. Procédé de réglage d'une puissance effective dans un parc éolien doté d'au moins deux éoliennes, dont la puissance délivrée est régulée respectivement par un régulateur éolien (51, ..., 5n), dans lequel une valeur de consigne de la puissance effective à fournir par le parc éolien (Pₛₑₜ, P_{set,global}) est appliquée à un répartiteur (20), qui répartit la valeur de consigne appliquée de la puissance effective à fournir par le parc éolien (Pₛₑₜ, P_{set,global}) sur des valeurs de consigne de la puissance effective pour la simulation par les différentes éoliennes (P_{simI,1}, P_{simI,2...}, P_{simI,n}), qui reçoit des valeurs de consigne modélisées de la puissance effective des éoliennes (P_{simO,1}, P_{simO,2}, P_{simO,n}) et qui génère une valeur de consigne modélisée de la puissance effective du parc éolien (P'ₛₑₜ) par sommation à partir des valeurs de consigne reçues de la puissance effective des éoliennes (P_{simO,1}, P_{simO,2}, P_{simO,n}), laquelle combinée avec une valeur réelle de la puissance effective (P_{act}) délivrée par le parc éolien est appliquée à un soustracteur, qui fournit une différence de régulation (e) d'un régulateur de puissance (30), qui génère une variable réglante de régulateur (u_{reg}), à laquelle une variable réglante de commande pilote (u_{ff}) définie indépendamment des états de fonctionnement des éoliennes et de leurs valeurs réelles est ajoutée pour former une variable réglante totale (u), dans lequel la valeur de consigne de la puissance effective du parc éolien (Pₛₑₜ, P_{set,global}) est répartie sur des modèles (221, 222, 22n) des éoliennes contenues dans le parc éolien et les modèles (221, 222, 22n) des éoliennes définissent la valeur de consigne respectivement modélisée de la puissance effective de l'éolienne respective (P_{simO,1}, P_{simO,2}, P_{simO,n}) en fonction de la part de la valeur de consigne de la puissance effective (P_{simI,1}, P_{simI,2}, P_{simI,n}) répartie pour le modèle respectif, dans lequel les modèles (221, 222, 22n) des éoliennes sont associés aux régulateurs éoliens respectifs (51, 52, ..5n).

2. Procédé selon la revendication 1, **caractérisé en ce que** les modèles (221, 222, 22n) des éoliennes recourent à au moins une grandeur de fonctionnement, un paramètre et/ou un indicateur d'état de l'éolienne respective.

3. Procédé de réglage selon la revendication 1 ou 2, **caractérisé en ce que** le comportement du parc éolien est reproduit par la totalité des modèles (221, 222, 22n) des éoliennes.

4. Procédé selon l'une des revendications 1 à 3, **caractérisé en ce que** la variable réglante totale (u) est répartie sur des variables réglantes des différentes éoliennes (u_{WT,1}, u_{WF,2}, u_{WT,n}).

5. Procédé selon la revendication 4, **caractérisé en ce que** la variable réglante totale (u) est répartie en fonction de la puissance effective respectivement disponible (P_{avail,1}, P_{avail,2}, ...) des différentes éoliennes (u_{WT,1}, u_{WF,2}, ...).

6. Procédé selon l'une des revendications 1 à 5, **caractérisé en ce que** le répartiteur (20) répartit la valeur de consigne appliquée (Pₛₑₜ, P_{set,global}) de la puissance effective à fournir par le parc éolien en fonction d'au moins une grandeur, qui est choisie parmi les grandeurs suivantes : une grandeur de fonctionnement, un paramètre et un indicateur d'état de l'éolienne.

7. Parc éolien doté d'au moins deux éoliennes et d'un régulateur de parc éolien (70), auquel une valeur de consigne de la puissance effective à fournir par le parc éolien (Pₛₑₜ, P_{set,global}) est appliquée pour commander les éoliennes contenues dans le parc éolien, dans lequel le régulateur de parc éolien (70) présente les composants suivants :
- une unité de commande pilote (60), qui est ajustée de manière à déterminer une variable réglante de commande pilote (u_{ff}) indépendamment des états de fonctionnement des éoliennes du parc éolien et de leurs valeurs réelles, et
- un répartiteur (20), qui est ajusté de manière à répartir la valeur de consigne de la puissance effective à fournir par le parc éolien sur des valeurs de consigne de la puissance effective des différentes éoliennes (P_{simI,1}, P_{simI,2}..., P_{simI,n}), à recevoir des valeurs de consigne modélisées de la puissance effective des éoliennes (P_{simO,1}, P_{simO,2}..., P_{simO,n}) et à déterminer une valeur de consigne modélisée de la puissance effective (P'ₛₑₜ) du parc éolien par sommation à partir des valeurs de consigne reçues de la puissance effective des éoliennes (P_{simO,1}, P_{simO,2}..., P_{simO,n}),
- un soustracteur, qui est ajusté de manière à déterminer une différence de régulation (e) à partir de la valeur modélisée de la puissance effective (P'ₛₑₜ) du parc éolien et d'une valeur réelle de la puissance effective (P_{act}) délivrée par le parc éolien,
- un régulateur de puissance (30), qui est ajusté de manière à déterminer une variable réglante de régulateur (u_{reg}) à partir de la différence de régulation (e),
- un additionneur, qui est ajusté de manière à déterminer une variable réglante totale (u) du parc éolien à partir de la variable réglante de commande pilote (u_{ff}) et de la variable réglante de régulateur (u_{reg}),
- dans lequel les éoliennes contenues dans le parc éolien présentent respectivement un modèle de l'éolienne (221, 222, 22n), auquel est appliquée la valeur de consigne de la puissance effective répartie de l'éolienne (P_{simI}) et qui est associé au régulateur éolien respectif (51, 52, 5n) et détermine une valeur de consigne modélisée de la puissance effective de l'éolienne (P_{simO}).

8. Parc éolien selon la revendication 7, **caractérisé en ce que** chacun des modèles de l'éolienne (221, 222, 22n) peut recourir à au moins une grandeur de fonctionnement, un paramètre et/ou un indicateur d'état de l'éolienne respective.

9. Parc éolien selon l'une des revendications 7 à 8, **caractérisé en ce qu'**un répartiteur de régulateur (40) est prévu, qui répartit la variable réglante totale (u) sur les variables réglantes des différentes éoliennes (u_{WT,1}, u_{WT,2}, u_{WT,n}).

10. Parc éolien selon la revendication 9, **caractérisé en ce que** le répartiteur de régulateur (40) répartit la variable réglante totale (u) en fonction de la puissance effective respectivement disponible (P_{avail,1}, P_{avail,2}, ...) des différentes éoliennes (u_{WT,1}, u_{WF,2}, ...).

11. Parc éolien selon l'une des revendications 7 à 10, **caractérisé en ce que** le répartiteur (20) répartit la valeur de consigne appliquée de la puissance effective à fournir par le parc éolien en fonction d'au moins une grandeur, qui est choisie parmi les grandeurs suivantes : une grandeur de fonctionnement, un paramètre et un indicateur d'état de l'éolienne.
